# FASCICULE DE BREVET EUROPEEN

(11) **EP 4 356 546 B1**
(45) Date de publication et mention de la délivrance du brevet: **06.08.2025**
(21) Numéro de dépôt: 22732670.9
(22) Date de dépôt: 14.06.2022
(51) Int. Cl.: H04B 10/116, H04B 10/114

(54) **DISPOSITIF DE CONTRÔLE DE L'ÉMISSION/RÉCEPTION D'UN POINT D'ACCÈS D'UN RÉSEAU OPTIQUE NON FILAIRE**
VORRICHTUNG ZUR STEUERUNG DER ÜBERTRAGUNG/RÜCKGEWINNUNG EINES ZUGANGSPUNKTES EINES DRAHTLOSEN OPTISCHEN NETZWERKS
DEVICE FOR CONTROLLING THE TRANSMISSION/RECEIPT OF AN ACCESS POINT OF A WIRELESS OPTICAL NETWORK

(30) Priorité: 15.06.2021 FR 2106322
(43) Date de publication de la demande: 24.04.2024
(73) Titulaire: Oledcomm, 78140 Velizy Villacoublay (FR)
(72) Inventeur: DOMINGUEZ-GONZALEZ, Carlos, 78140 Vélizy-Villacoublay (FR); LARTIGUE, Clément, 78140 Vélizy-Villacoublay (FR)
(74) Mandataire: Bonnet, Michel
(86) Numéro de dépôt international: PCT/IB2022/055496
(87) Numéro de publication internationale: WO 2022/264028

(56) Documents cités:
- WO-A1-2021/094669
- CN-A- 101 938 310
- FR-A1- 3 015 158
- DAS SANDIP ET AL: "MIL-STD-1553 based wireless visible light communication system", 2016 IEEE INTERNATIONAL CONFERENCE ON ADVANCED NETWORKS AND TELECOMMUNICATIONS SYSTEMS (ANTS), IEEE, 6 November 2016 (2016-11-06), pages 1 - 6, XP033105693, DOI: 10.1109/ANTS.2016.7947843

## Description

La présente invention concerne un dispositif de contrôle destiné à équiper un point d'accès d'un réseau de communication optique sans fil.

Certains réseaux de communication optique non filaires (ou OWC (« Optical Wireless Communication »)), éventuellement de type LiFi (« Light Fidelity »), comprennent un bus de communication auquel sont connectés des points d'accès. Ces derniers permettent à des équipements de communication (comme par exemple des téléphones mobiles (éventuellement intelligents (ou « smartphones »)), des tablettes électroniques, ou des ordinateurs (éventuellement portables)), couplés à des équipements d'interface OWC (généralement des accessoires (ou « dongles »)), de communiquer au moyen de signaux lumineux modulés en intensité et/ou fréquence et représentatifs de données.

Dans ce type de réseau OWC chaque point d'accès comprend une interface d'entrée/sortie connectée au bus de communication, un étage d'émission propre à convertir un signal issu de l'interface d'entrée/sortie en un signal lumineux émis, et un étage de réception propre à convertir un signal lumineux reçu en un signal qui est communiqué à l'interface d'entrée/sortie. Les documents de l'état de l'art 'MIL-STD-1553 based wireless visible light communication system' et CN101938310A divulguent un tel type de réseau OWC.

Tous les points d'accès connectés à un même bus de communication devant pouvoir communiquer entre eux les uns après les autres, plus le nombre de points d'accès est important plus la sensibilité de leur étage de réception doit être importante (typiquement entre -30 dB et -40 dB en présence de plus de vingt points d'accès). Du fait de cette sensibilité importante de l'étage de réception, il arrive que le signal lumineux émis par l'étage de réception d'un point d'accès soit reçu un peu plus tard par l'étage d'émission de ce même point d'accès consécutivement à au moins une réflexion (par exemple contre une surface). Dans ce cas, les données contenues dans le signal lumineux reçu par un point d'accès après réflexion(s) retournent dans le bus de communication via ce même point d'accès, et donc vont être de nouveau réémises par ce dernier, ce qui génère des perturbations sur la trame et peut rendre le bus de communication inopérant car les mêmes données peuvent boucler un grand nombre de fois, voire infiniment, au niveau d'un même point d'accès, et cette boucle ne peut être interrompue que par la coupure physique du lien optique entre les étage de réception et étage d'émission.

Il peut ainsi être souhaité de prévoir un dispositif de contrôle qui permette de s'affranchir d'au moins une partie de l'inconvénient précité.

Il est donc notamment proposé un dispositif de contrôle destiné à équiper un point d'accès comprenant une interface d'entrée/sortie connectée à un bus de communication utilisant un protocole de communication, un étage d'émission propre à convertir un premier signal issu de l'interface d'entrée/sortie en un signal lumineux émis, et un étage de réception propre à convertir un signal lumineux reçu en un second signal communiqué à l'interface d'entrée/sortie.

Ce dispositif de contrôle se caractérise par le fait qu'il est agencé soit pour désactiver l'étage de réception lorsque l'interface d'entrée/sortie reçoit un premier signal du bus de communication, et pour activer l'étage de réception lorsque l'interface d'entrée/sortie ne reçoit plus de premier signal du bus de communication, soit pour désactiver l'étage d'émission lorsque l'étage de réception reçoit un signal lumineux, et pour activer l'étage d'émission lorsque l'étage de réception ne reçoit plus de signal lumineux.

Ainsi, on limite, voire empêche, la probabilité de boucle et donc les perturbations du fonctionnement du bus de communication.

Le dispositif de contrôle selon l'invention peut comporter d'autres caractéristiques qui peuvent être prises séparément ou en combinaison, et notamment :
- dans un premier mode de réalisation, en présence d'un point d'accès comprenant un étage d'émission comportant un module optoélectronique d'émission propre à convertir en signal lumineux un signal numérique issu d'un premier signal et un étage de réception comportant un module optoélectronique de réception propre à convertir un signal lumineux reçu en un signal numérique représentatif d'un second signal, il peut être agencé soit pour désactiver le module optoélectronique de réception lorsque l'interface d'entrée/sortie reçoit un premier signal du bus de communication, et pour activer le module optoélectronique de réception lorsque l'interface d'entrée/sortie ne reçoit plus de premier signal du bus de communication, soit pour désactiver le module optoélectronique d'émission lorsque l'étage de réception reçoit un signal lumineux, et pour activer le module optoélectronique d'émission lorsque l'étage de réception ne reçoit plus de signal lumineux ;
- dans ce premier mode de réalisation, en présence d'un point d'accès comprenant un étage d'émission comportant un premier module de conditionnement intercalé entre l'interface d'entrée/sortie et le module optoélectronique d'émission et propre à mettre en forme le premier signal pour qu'il soit compatible avec un niveau de tension admissible par le module optoélectronique d'émission, et un étage de réception comportant un second module de conditionnement intercalé entre le module optoélectronique de réception et l'interface d'entrée/sortie et propre à mettre en forme le signal numérique fourni par le module optoélectronique de réception pour que le second signal résultant soit interprétable sur le bus de communication, il peut comprendre un premier détecteur de signal agencé pour détecter chaque premier signal dans le premier module de conditionnement et pour activer/désactiver le module optoélectronique de réception, et un second détecteur de signal agencé pour détecter chaque signal numérique fourni par le module optoélectronique de réception dans le second module de conditionnement et pour activer/ désactiver le module optoélectronique d'émission. Par exemple, les premier et second détecteurs de signal peuvent comprendre chacun un multivibrateur monostable ;
- en variante il peut comprendre un contrôleur agencé pour détecter chaque premier signal et chaque signal numérique, et pour activer/désactiver les étage d'émission et étage de réception. Dans ce cas, le contrôleur peut, par exemple, être agencé pour activer/désactiver les module optoélectronique d'émission et module optoélectronique de réception ;
- dans un second mode de réalisation, il peut être agencé pour introduire dans l'étage d'émission un premier décalage temporel de chaque premier signal supérieur ou égal à une première durée nécessaire à la désactivation de l'étage de réception et compatible avec le protocole de communication, et pour introduire dans l'étage de réception un second décalage temporel de chaque second signal avant qu'il ne parvienne à l'interface d'entrée/sortie, ce second décalage temporel étant supérieur à une seconde durée nécessaire à la désactivation de l'étage d'émission et compatible avec le protocole de communication ;
- dans ce second mode de réalisation, en présence d'un point d'accès comprenant un étage d'émission comportant un module optoélectronique d'émission propre à convertir en signal lumineux un signal numérique issu d'un premier signal et un premier module de conditionnement intercalé entre l'interface d'entrée/sortie et le module optoélectronique d'émission et propre à mettre en forme le premier signal pour qu'il soit compatible avec un niveau de tension admissible par le module optoélectronique d'émission, et un étage de réception comportant un module optoélectronique de réception propre à convertir un signal lumineux reçu en un signal numérique représentatif d'un second signal et un second module de conditionnement intercalé entre l'interface d'entrée/sortie et le module optoélectronique de réception et propre à mettre en forme le signal numérique fourni par le module optoélectronique de réception pour que le second signal résultant soit interprétable sur le bus de communication, il peut être propre à agir sur les premier et second modules de conditionnement pour les activer/désactiver ;
- en présence de la dernière option, une première somme du premier décalage temporel et d'un premier temps de propagation du premier signal dans le premier module de conditionnement additionnée à une seconde somme du second décalage temporel et d'un second temps de propagation du signal numérique représentatif d'un second signal dans le second module de conditionnement peut être inférieure à une demi-période du protocole de communication ;
- également en présence de la dernière option, il peut comprendre un premier détecteur de signal agencé pour détecter chaque premier signal fourni par l'interface d'entrée/sortie, et un second détecteur de signal agencé pour détecter chaque signal fourni par le second module de conditionnement. Par exemple, les premier et second détecteurs de signal peuvent comprendre chacun un multivibrateur monostable ;
- également en présence de la dernière option, il peut comprendre au moins un premier comparateur introduisant le premier décalage temporel, et au moins un second comparateur introduisant le second décalage temporel ;
- en variante, dans le second mode de réalisation il peut comprendre un contrôleur agencé pour détecter chaque premier signal et chaque second signal, et pour activer/désactiver les étage d'émission et étage de réception ;
- en présence de la dernière option, le contrôleur peut être agencé pour activer/ désactiver les premier module de conditionnement et second module de conditionnement ;
- également en présence de la dernière option, le contrôleur peut être agencé pour introduire les premier et second décalages temporels.

L'invention propose également un point d'accès comprenant une interface d'entrée/sortie propre à être connectée à un bus de communication utilisant un protocole de communication, un étage d'émission propre à convertir un premier signal issu de l'interface d'entrée/sortie en un signal lumineux émis, un étage de réception propre à convertir un signal lumineux reçu en un second signal communiqué à l'interface d'entrée/sortie, et un dispositif de contrôle du type de celui présenté ci-avant.

Par exemple, ce point d'accès peut être propre à faire partie d'un réseau optique non filaire de type Light Fidelity (ou LiFi).

L'invention sera mieux comprise à l'aide de la description qui va suivre, donnée uniquement à titre d'exemple et faite en se référant aux dessins annexés dans lesquels :

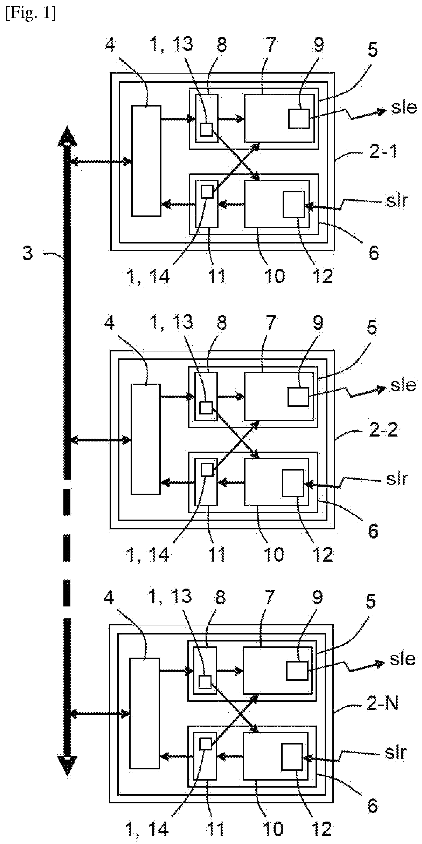

[Fig.1] la [Fig.1] illustre schématiquement et fonctionnellement un exemple de bus de communication d'un réseau de communication optique non filaire auquel sont connectés des exemples de points d'accès comprenant chacun un premier exemple de réalisation d'un dispositif de contrôle selon l'invention,

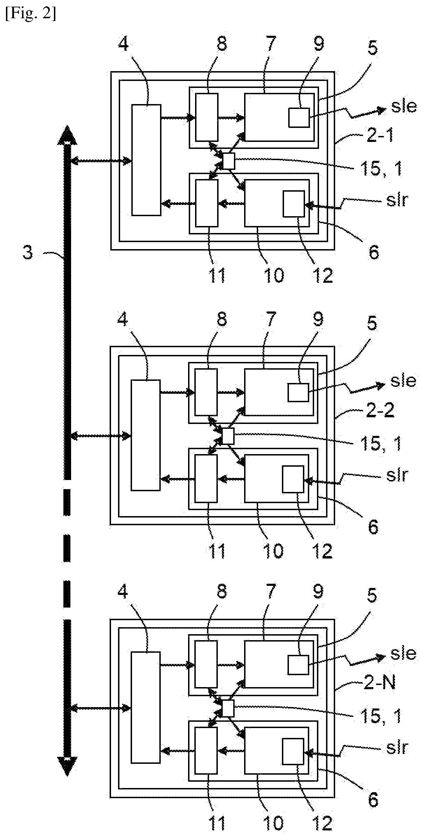

[Fig.2] la [Fig.2] illustre schématiquement et fonctionnellement un exemple de bus de communication d'un réseau de communication optique non filaire auquel sont connectés des exemples de points d'accès comprenant chacun un deuxième exemple de réalisation d'un dispositif de contrôle selon l'invention,

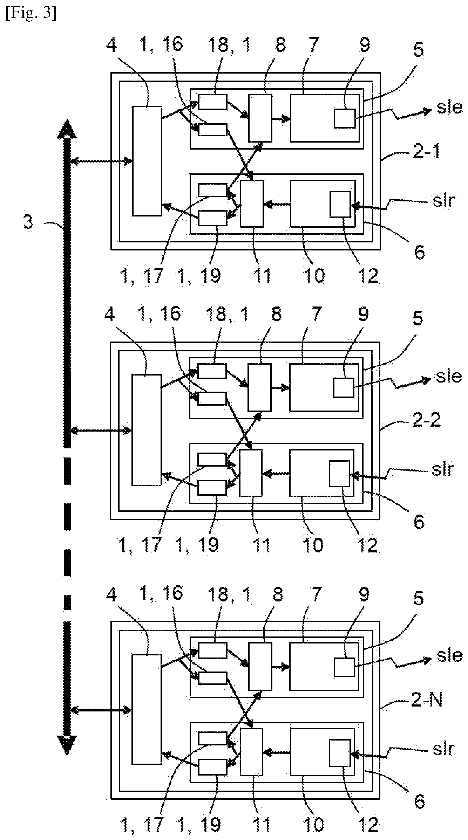

[Fig.3] la [Fig.3] illustre schématiquement et fonctionnellement un exemple de bus de communication d'un réseau de communication optique non filaire auquel sont connectés des exemples de points d'accès comprenant chacun un troisième exemple de réalisation d'un dispositif de contrôle selon l'invention, et

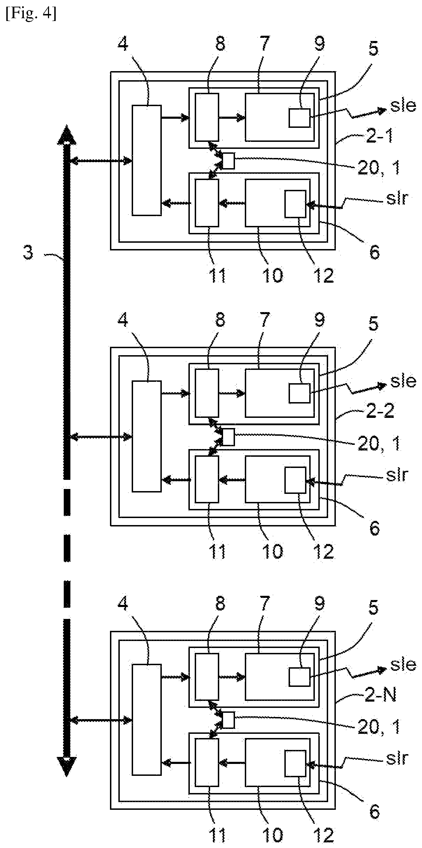

[Fig.4] la [Fig.4] illustre schématiquement et fonctionnellement un exemple de bus de communication d'un réseau de communication optique non filaire auquel sont connectés des exemples de points d'accès comprenant chacun un quatrième exemple de réalisation d'un dispositif de contrôle selon l'invention.

L'invention a notamment pour but de proposer un dispositif de contrôle 1 destiné à faire partie d'un point d'accès 2-n (n = 1 à N), lui-même destiné à équiper un bus de communication 3 d'un réseau de communication optique non filaire (ou OWC). N peut prendre n'importe quelle valeur supérieure ou égale à un. Par exemple, N peut être compris entre dix et trente.

Dans ce qui suit on considère que le réseau de communication optique non filaire est de type Light Fidelity (ou LiFi). Mais l'invention n'est pas limitée à ce type de réseau de communication optique non filaire (ou OWC). Elle concerne en effet tout type de réseau de communication optique non filaire basé sur un multiplexage temporel et/ou fréquentiel.

Comme illustré sur les figures 1 à 4 chaque point d'accès 2-n, connecté au bus de communication 3, comprend au moins une interface d'entrée/sortie 4, un étage d'émission 5, un étage de réception 6 et un dispositif de contrôle 1 selon l'invention.

L'interface d'entrée/sortie 4 est connectée de façon bidirectionnelle au bus de communication 3 qui utilise un protocole de communication choisi, comme par exemple CANBUS ou MIL-STD-1553.

L'étage d'émission 5 est propre à convertir un premier signal s1 qui est issu de l'interface d'entrée/sortie 4 en un signal lumineux sle émis à destination d'au moins un équipement de communication (non illustré) auquel est couplé un équipement d'interface OWC (généralement un accessoire (ou dongle)). Par exemple, un équipement de communication peut être un téléphone mobile (éventuellement intelligent (ou smartphone)), une tablette électronique, un ordinateur (éventuellement portable), un capteur, un calculateur embarqué, ou n'importe quel équipement communicant que l'on peut relier au bus de communication 3.

L'étage de réception 6 est propre à convertir un signal lumineux slr reçu (en provenance d'un équipement de communication, via un équipement d'interface OWC) en un second signal s2 qu'il communique à l'interface d'entrée/sortie 4.

Le dispositif de contrôle 1, selon l'invention, est agencé soit pour désactiver l'étage de réception 6 lorsque l'interface d'entrée/sortie 4 reçoit un premier signal s1 du bus de communication 3, et pour activer l'étage de réception 6 lorsque l'interface d'entrée/sortie 3 ne reçoit plus de premier signal s1 du bus de communication 3, soit pour désactiver l'étage d'émission 5 lorsque l'étage de réception 6 reçoit un signal lumineux, et pour activer l'étage d'émission 5 lorsque l'étage de réception 6 ne reçoit plus de signal lumineux.

En d'autres termes, lorsqu'un point d'accès 2-n doit émettre un signal lumineux sle, on désactive son étage de réception 6 pour éviter qu'il ne reçoive ce même signal lumineux sle, après réflexion(s), et lorsqu'un point d'accès 2-n reçoit un signal lumineux slr, on désactive son étage d'émission 5 pour éviter qu'il ne réémette ce signal lumineux slr. On limite, voire empêche, ainsi la probabilité de boucle et donc les perturbations du fonctionnement du bus de communication 3.

Par exemple, et comme illustré non limitativement sur les figures 1 à 4, l'étage d'émission 5 d'un point d'accès 2-n peut comprendre un module optoélectronique d'émission 7 propre à convertir en signal lumineux sle un signal numérique sn issu d'un premier signal s1, ainsi qu'éventuellement un premier module de conditionnement 8 intercalé entre l'interface d'entrée/sortie 4 et ce module optoélectronique d'émission 7 et propre à mettre en forme ce premier signal s1 (issu de l'interface d'entrée/sortie 4) pour qu'il soit compatible avec un niveau de tension qui est admissible par le module optoélectronique d'émission 7.

Le module optoélectronique d'émission 7 comprend au moins une source lumineuse 9 chargée de générer les signaux lumineux sle modulés en intensité et/ou fréquence et représentatifs de données à transmettre. Cette source lumineuse 9 peut, par exemple, comprendre au moins une diode électroluminescente (ou LED) ou au moins une diode laser ou encore au moins une diode laser à cavité verticale émettant par la surface (ou « Vertical Cavity Surface-Emitting Laser (ou VCSEL)) ».

Le module optoélectronique d'émission 7 est chargé de réaliser la modulation précitée et d'injecter le courant qui est nécessaire à la transmission des données par la source lumineuse 9. C'est dans ce module optoélectronique d'émission 7 que la puissance électrique fournie à la source lumineuse 9 pour la transmission des données est réglée en fonction des différentes contraintes (distances maximum et minimum de transmission par voie optique et consommation électrique, par exemple). La modulation et l'injection sont assurées par ce que l'homme de l'art appelle parfois un dispositif AFE (« Analog Front-End »), lequel peut éventuellement comprendre la source lumineuse 9 (comme illustré non limitativement).

Egalement par exemple, et comme illustré non limitativement sur les figures 1 à 4, l'étage de réception 6 d'un point d'accès 2-n peut comprendre un module optoélectronique de réception 10 propre à convertir un signal lumineux reçu slr en un signal numérique sn qui est représentatif d'un second signal s2 (devant être transmis à l'interface d'entrée/sortie 4), ainsi qu'éventuellement un second module de conditionnement 11 intercalé entre le module optoélectronique de réception 10 et l'interface d'entrée/sortie 4 et propre à mettre en forme le signal numérique sn fourni par le module optoélectronique de réception 10 pour que le second signal s2 résultant soit interprétable sur le bus de communication 3.

Le module optoélectronique de réception 10 comprend au moins un photorécepteur 12 chargé de capter (ou recevoir) les signaux lumineux slr afin de les convertir en signal électrique de type courant (ou photocourant). Ce photorécepteur 12 peut, par exemple, comporter au moins une photodiode ou au moins une photodiode à avalanche ou au moins une diode à avalanche à photon unique (ou « Single-Photon Avalanche Diode (ou SPAD)) ».

Le module optoélectronique de réception 10 est chargé de filtrer et d'amplifier le photocourant délivré par le photorécepteur 12 qui a généralement une très faible amplitude (typiquement quelques mV tout au plus). C'est dans ce module optoélectronique de réception 10 que la sensibilité et la dynamique de réception peuvent être ajustées. Le filtrage et l'amplification sont assurés par un dispositif AFE (Analog Front-End), lequel peut éventuellement comprendre le photorécepteur 12 (comme illustré non limitativement).

Au moins deux modes de réalisation peuvent être envisagés pour le dispositif de contrôle 1. Ces deux modes de réalisation sont décrits ci-après en référence respectivement aux figures 1 et 2 et aux figures 3 et 4.

Dans un premier mode de réalisation illustré sur les figures 1 et 2, le dispositif de contrôle 1 peut être agencé soit pour désactiver le module optoélectronique de réception 10 lorsque l'interface d'entrée/sortie 4 reçoit un premier signal s1 du bus de communication 3, et pour activer le module optoélectronique de réception 10 lorsque l'interface d'entrée/sortie 4 ne reçoit plus de premier signal s1 du bus de communication 3, soit pour désactiver le module optoélectronique d'émission 7 lorsque l'étage de réception 6 reçoit un signal lumineux slr, et pour activer le module optoélectronique d'émission 7 lorsque l'étage de réception 6 ne reçoit plus de signal lumineux slr. Ce sont donc ici les module optoélectronique d'émission 7 et module optoélectronique de réception 10 qui sont activés ou désactivés en fonction des besoins.

Par exemple, et comme illustré non limitativement sur la [Fig.1], le dispositif de contrôle 1 peut comprendre des premier 13 et second 14 détecteurs de signal.

Le premier détecteur de signal 13 est agencé pour détecter chaque premier signal s1 (issu de l'interface d'entrée/sortie 4) dans le premier module de conditionnement 8 et pour activer/désactiver le module optoélectronique de réception 10 en fonction des besoins. On comprendra que lorsque le premier détecteur de signal 13 détecte un premier signal s1 dans le premier module de conditionnement 8, il déclenche la désactivation du module optoélectronique de réception 10, par exemple en lui transmettant un signal dédié ayant une première valeur, et lorsque le premier détecteur de signal 13 ne détecte plus de premier signal s1 dans le premier module de conditionnement 8, il déclenche l'activation du module optoélectronique de réception 10, par exemple en lui transmettant ce signal dédié mais avec une seconde valeur. Comme illustré non limitativement sur la [Fig.1], le premier détecteur de signal 13 peut être installé dans le premier module de conditionnement 8.

Le second détecteur de signal 14 est agencé pour détecter chaque signal numérique sn fourni par le module optoélectronique de réception 10 dans le second module de conditionnement 11 et pour activer/désactiver le module optoélectronique d'émission 7 en fonction des besoins. On comprendra que lorsque le second détecteur de signal 14 détecte un signal numérique sn dans le second module de conditionnement 11, il déclenche la désactivation du module optoélectronique d'émission 7, par exemple en lui transmettant un signal dédié ayant une première valeur, et lorsque le second détecteur de signal 14 ne détecte plus de signal numérique sn dans le second module de conditionnement 11, il déclenche l'activation du module optoélectronique d'émission 7, par exemple en lui transmettant ce signal dédié mais avec une seconde valeur. Comme illustré non limitativement sur la [Fig.1], le second détecteur de signal 14 peut être installé dans le second module de conditionnement 11.

A titre d'exemple, les premier 13 et second 14 détecteurs de signal peuvent chacun comprendre un multivibrateur monostable.

Dans une variante de réalisation illustrée non limitativement sur la [Fig.2], le dispositif de contrôle 1 peut, par exemple, comprendre un contrôleur 15 qui est agencé pour détecter chaque premier signal s1 et chaque signal numérique sn, et pour activer/ désactiver les étage d'émission 5 et étage de réception 6 en fonction des besoins.

Par exemple, ce contrôleur 15 peut être agencé pour activer/désactiver les module optoélectronique d'émission 7 et module optoélectronique de réception 10 en fonction des besoins.

Egalement par exemple, et comme illustré non limitativement sur la [Fig.2], ce contrôleur 15 peut être externe aux étage d'émission 5, étage de réception 6, premier module de conditionnement 8 et second module de conditionnement 11, tout en étant couplé à ces quatre derniers (5, 6, 8, 11). Plus précisément, il doit être couplé à au moins deux des quatre éléments précités, au moins un en émission et au moins un en réception, les quatre pouvant être connectés.

On notera que le contrôleur 15 comprend au moins un processeur (ou unité de traitement) et au moins une mémoire coopérant ensemble. Le processeur (ou unité de traitement) peut, par exemple, être un processeur de signal numérique (ou DSP (« Digital Signal Processor »)). La mémoire stocke des fichiers de données et de programme(s) d'ordinateur dont les instructions sont destinées à être exécutées par le processeur (ou unité de traitement). Cette mémoire peut, par exemple, être de type RAM (« Random Access Memory »), mais elle pourrait être d'un autre type. Ce processeur et cette mémoire sont agencés pour effectuer ensemble des opérations assurant la détection et l'activation/désactivation au sein de leur point d'accès 2-n. Le contrôleur 15 peut aussi comprendre une interface d'entrée pour la réception d'au moins les premiers signaux s1 et signaux numériques sn pour les utiliser dans des calculs ou traitements, éventuellement après les avoir mis en forme et/ou démodulés et/ou amplifiés, de façon connue en soi, au moyen d'un processeur de signal numérique. De plus, ce contrôleur 15 peut aussi comprendre une interface de sortie, notamment pour délivrer les messages d'activation/désactivation, et/ou une mémoire de masse. Ce contrôleur 15 peut, par exemple, être réalisé sous la forme d'une combinaison de circuits ou composants électriques ou électroniques (ou « hardware »), éventuellement micro-programmés ou micro-câblées, de modules logiciels (ou « software »), de circuits intégrés de type FPGA (« Field Programmable Gate Array ») et de circuits intégrés spécialisés (ou ASIC (« Application-Specific Integrated Circuit »)).

Dans un second mode de réalisation illustré sur les figures 3 et 4, le dispositif de contrôle 1 peut être agencé pour introduire dans l'étage d'émission 5 un premier décalage temporel dt1 de chaque premier signal s1, et dans l'étage de réception 6 un second décalage temporel dt2 de chaque second signal s2 avant qu'il ne parvienne à l'interface d'entrée/sortie 4. Le premier décalage temporel dt1 est supérieur ou égal à une première durée dd1 nécessaire à la désactivation de l'étage de réception 6 et compatible avec le protocole de communication. Le second décalage temporel dt2 est supérieur à une seconde durée dd2 nécessaire à la désactivation de l'étage d'émission 5 et compatible avec le protocole de communication.

Ce second mode de réalisation est mis en œuvre lorsque le temps que met un signal lumineux sle émis par un point d'accès 2-n pour revenir à ce dernier (2-n) est plus court que la seconde durée dd2 nécessaire à la désactivation de l'étage de réception 6, et/ou lorsque la durée des traitements et propagations internes d'un signal sn, s2 résultant d'un signal lumineux reçu slr est plus courte que la première durée dd1 nécessaire à la désactivation de l'étage d'émission 5. Il permet donc de garantir qu'il n'y aura pas d'interférences et d'échos entre les étage d'émission 5 et étage de réception 6, malgré la forte sensibilité de ce dernier (6), mais également que les latences introduites (notamment par les propagations internes) ne créeront pas de décalage trop important par rapport aux vitesses de communication et aux latences imposées par les différents protocoles.

Dans ce second mode de réalisation, le dispositif de contrôle 1 peut, par exemple, être propre à agir sur (activer/désactiver) les premier 8 et second 11 modules de conditionnement. Dans ce cas, la première somme ps du premier décalage temporel dt1 et d'un premier temps de propagation tp1 du premier signal s1 dans le premier module de conditionnement 8 additionnée à la seconde somme ss du second décalage temporel dt2 et d'un second temps de propagation tp2 du signal numérique sn représentatif d'un second signal s2 dans le second module de conditionnement 11 est de préférence inférieure à la demi-période (T/2) du protocole de communication du bus de communication 3 (soit ps (= dt1 + tp1) + ss (= dt2 + tp2) < T/2, avec dt1 > dd2 et dt2 > dd1). Par exemple, si le protocole de communication fonctionne à 1 MHz, on a T/2 = 500 ns, et donc ps + ss < 500 ns. C'est par exemple le cas lorsque dd1 = dd2 = 100 ns, dt1 = dt2 = 180 ns et tp1 = tp2 = 18 ns (on vérifie en effet que l'on a alors ps + ss = (180 + 18)*2 = 396 ns < 500 ns.

Par exemple, et comme illustré non limitativement sur la [Fig.3], le dispositif de contrôle 1 peut comprendre des premier 16 et second 17 détecteurs de signal.

Le premier détecteur de signal 16 est agencé pour détecter chaque premier signal s1 (issu de l'interface d'entrée/sortie 4) et pour activer/désactiver le second module de conditionnement 11 en fonction des besoins. On comprendra que lorsque le premier détecteur de signal 16 détecte un premier signal s1 en aval de l'interface d'entrée/sortie 4, il déclenche la désactivation du second module de conditionnement 11, par exemple en lui transmettant un signal dédié ayant une première valeur, et lorsque le premier détecteur de signal 16 ne détecte plus de premier signal s1 en aval de l'interface d'entrée/sortie 4, il déclenche l'activation du second module de conditionnement 11, par exemple en lui transmettant ce signal dédié mais avec une seconde valeur. Comme illustré non limitativement sur la [Fig.3], le premier détecteur de signal 16 peut être installé en amont du premier module de conditionnement 8 et reçoit le premier signal s1 fourni par l'interface d'entrée/sortie 4 à son point d'accès 2-n.

Le second détecteur de signal 17 est agencé pour détecter chaque second signal s2 fourni par le second module de conditionnement 11 et pour activer/désactiver le premier module de conditionnement 8 en fonction des besoins. On comprendra que lorsque le second détecteur de signal 17 détecte un second signal s2 fourni par le second module de conditionnement 11, il déclenche la désactivation du premier module de conditionnement 8, par exemple en lui transmettant un signal dédié ayant une première valeur, et lorsque le second détecteur de signal 17 ne détecte plus de second signal s2 fourni par le second module de conditionnement 11, il déclenche l'activation du premier module de conditionnement 8, par exemple en lui transmettant ce signal dédié mais avec une seconde valeur. Comme illustré non limitativement sur la [Fig.3], le second détecteur de signal 17 peut être installé en aval du second module de conditionnement 11 et reçoit le second signal s2 fourni par ce dernier (11).

A titre d'exemple, les premier 16 et second 17 détecteurs de signal peuvent chacun comprendre un multivibrateur monostable.

Egalement par exemple, et comme illustré non limitativement sur la [Fig.3], le dispositif de contrôle 1 peut comprendre au moins un premier comparateur 18 introduisant le premier décalage temporel dt1, et au moins un second comparateur 19 introduisant le second décalage temporel dt2.

Comme illustré non limitativement sur la [Fig.3], le premier comparateur 18 peut être installé en amont du premier module de conditionnement 8 et reçoit le premier signal s1 fourni par l'interface d'entrée/sortie 4 à son point d'accès 2-n, qu'il retarde pour le communiquer au premier module de conditionnement 8 avec le premier décalage temporel dt1. Egalement comme illustré non limitativement sur la [Fig.3], le second comparateur 19 peut être installé en aval du second module de conditionnement 11 et reçoit le second signal s2 fourni par ce dernier (11), qu'il retarde pour le communiquer à l'interface d'entrée/sortie 4 avec le second décalage temporel dt2.

L'utilisation de comparateurs 18, 19 est particulièrement intéressante lorsque les décalages temporels dt1, dt2 à introduire sont typiquement supérieurs à une centaine de nanosecondes. Lorsque les décalages temporels dt1, dt2 à introduire sont inférieurs à une centaine de nanosecondes, ils peuvent être réalisés par une électronique analogique de plus « bas-niveau » (typiquement des transistors et des filtres) couplée à une technique de routage permettant de maitriser les temps de propagation des différents signaux afin de permettre un ajustement plus fin des temps d'activation (par exemple en jouant sur les longueurs des pistes propageant les signaux).

Dans une variante de réalisation illustrée non limitativement sur la [Fig.4], le dispositif de contrôle 1 peut, par exemple, comprendre un contrôleur 20 qui est agencé pour détecter chaque premier signal s1 et chaque second signal s2, et pour activer/ désactiver les étage d'émission 5 et étage de réception 6 en fonction des besoins.

Par exemple, ce contrôleur 20 peut être agencé pour activer/désactiver les premier module de conditionnement 8 et second module de conditionnement 11 en fonction des besoins.

Egalement par exemple, et comme illustré non limitativement sur la [Fig.4], ce contrôleur 20 peut être externe aux étage d'émission 5, étage de réception 6, premier module de conditionnement 8 et second module de conditionnement 11, tout en étant couplé à ces deux derniers (8, 11).

Egalement par exemple, le contrôleur 20 peut être agencé pour introduire les premier dt1 et second dt2 décalages temporels, ce qui est possible si les signaux s1 et s2 transitent par ce contrôleur 20 qui n'est alors pas uniquement limité à la détection de signaux.

On notera que le contrôleur 20 comprend au moins un processeur (ou unité de traitement) et au moins une mémoire coopérant ensemble. Le processeur (ou unité de traitement) peut, par exemple, être un processeur de signal numérique (ou DSP). La mémoire stocke des fichiers de données et de programme(s) d'ordinateur dont les instructions sont destinées à être exécutées par le processeur (ou unité de traitement). Cette mémoire peut, par exemple, être de type RAM, mais elle pourrait être d'un autre type. Ce processeur et cette mémoire sont agencés pour effectuer ensemble des opérations assurant la détection et l'activation/désactivation au sein de leur point d'accès 2-n. Le contrôleur 20 peut aussi comprendre une interface d'entrée pour la réception d'au moins les premiers signaux s1 et seconds signaux s2 pour les utiliser dans des calculs ou traitements, éventuellement après les avoir mis en forme et/ou démodulés et/ou amplifiés, de façon connue en soi, au moyen d'un processeur de signal numérique. De plus, ce contrôleur 20 peut aussi comprendre une interface de sortie, notamment pour délivrer les messages d'activation/désactivation, et/ou une mémoire de masse. Ce contrôleur 20 peut, par exemple, être réalisé sous la forme d'une combinaison de circuits ou composants électriques ou électroniques (ou hardware), éventuellement micro-programmés ou micro-câblées, de modules logiciels (ou software), de circuits intégrés de type FPGA et de circuits intégrés spécialisés (ou ASIC).

L'utilisation d'un contrôleur 20 permet d'augmenter notablement la flexibilité du fait d'une gestion globale et centralisée de l'ensemble des temps de propagation (et notamment des décalages temporels dt1 et dt2) et des vitesses de communication en temps réel, mais aussi des activations/désactivations en temps réel car l'origine des signaux et données est connue en permanence.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué. Dans la présentation détaillée de l'invention qui est faite précédemment, les termes utilisés ne doivent pas être interprétés comme limitant l'invention aux modes de réalisation exposés dans la présente description, l'invention étant définie par les revendications jointes.

## Revendications

1. Dispositif de contrôle (1) pour un point d'accès (2-n) comprenant une interface d'entrée/sortie (4) connectée à un bus de communication (3) utilisant un protocole de communication, un étage d'émission (5) propre à convertir un premier signal issu de ladite interface d'entrée/sortie (4) en un signal lumineux émis, et un étage de réception (6) propre à convertir un signal lumineux reçu en un second signal communiqué à ladite interface d'entrée/sortie (4),
**caractérisé en ce qu'**il est agencé soit pour désactiver ledit étage de réception (6) lorsque ladite interface d'entrée/sortie (4) reçoit un premier signal dudit bus de communication (3), et pour activer ledit étage de réception (6) lorsque ladite interface d'entrée/sortie (4) ne reçoit plus de premier signal dudit bus de communication (3), soit pour désactiver ledit étage d'émission (5) lorsque ledit étage de réception (6) reçoit un signal lumineux, et pour activer ledit étage d'émission (5) lorsque ledit étage de réception (6) ne reçoit plus de signal lumineux.

2. Dispositif selon la revendication 1, **caractérisé en ce qu'**en présence d'un point d'accès (2-n) comprenant un étage d'émission (5) comportant un module optoélectronique d'émission (7) propre à convertir en signal lumineux un signal numérique issu d'un premier signal et un étage de réception (6) comportant un module optoélectronique de réception (10) propre à convertir un signal lumineux reçu en un signal numérique représentatif d'un second signal, il est agencé soit pour désactiver ledit module optoélectronique de réception (10) lorsque ladite interface d'entrée/sortie (4) reçoit un premier signal dudit bus de communication (3), et pour activer ledit module optoélectronique de réception (10) lorsque ladite interface d'entrée/sortie (4) ne reçoit plus de premier signal dudit bus de communication (3), soit pour désactiver ledit module optoélectronique d'émission (7) lorsque ledit étage de réception (6) reçoit un signal lumineux, et pour activer ledit module optoélectronique d'émission (7) lorsque ledit étage de réception (6) ne reçoit plus de signal lumineux.

3. Dispositif selon la revendication 2, **caractérisé en ce qu'**en présence d'un point d'accès (2-n) comprenant un étage d'émission (5) comportant un premier module de conditionnement (8) intercalé entre ladite interface d'entrée/sortie (4) et ledit module optoélectronique d'émission (7) et propre à mettre en forme ledit premier signal pour qu'il soit compatible avec un niveau de tension admissible par ledit module optoélectronique d'émission (7), et un étage de réception (6) comportant un second module de conditionnement (11) intercalé entre ledit module optoélectronique de réception (10) et ladite interface d'entrée/sortie (4) et propre à mettre en forme ledit signal numérique fourni par ledit module optoélectronique de réception (10) pour que ledit second signal résultant soit interprétable sur ledit bus de communication (3), il comprend un premier détecteur de signal (13) agencé pour détecter chaque premier signal dans ledit premier module de conditionnement (8) et pour activer/ désactiver ledit module optoélectronique de réception (10), et un second détecteur de signal (14) agencé pour détecter chaque signal numérique fourni par ledit module optoélectronique de réception (10) dans ledit second module de conditionnement (11) et pour activer/désactiver ledit module optoélectronique d'émission (7).

4. Dispositif selon la revendication 2, **caractérisé en ce qu'**il comprend un contrôleur (15) agencé pour détecter chaque premier signal et chaque signal numérique, et pour activer/désactiver lesdits étage d'émission (5) et étage de réception (6).

5. Dispositif selon la combinaison des revendications 2 et 4, **caractérisé en ce que** ledit contrôleur (15) est agencé pour activer/désactiver lesdits module optoélectronique d'émission (7) et module optoélectronique de réception (10).

6. Dispositif selon la revendication 1, **caractérisé en ce qu'**il est agencé pour introduire dans ledit étage d'émission (5) un premier décalage temporel de chaque premier signal supérieur ou égal à une première durée nécessaire à la désactivation dudit étage de réception (6) et compatible avec ledit protocole de communication, et pour introduire dans ledit étage de réception (6) un second décalage temporel de chaque second signal avant qu'il ne parvienne à ladite interface d'entrée/sortie (4), ce second décalage temporel étant supérieur à une seconde durée nécessaire à la désactivation dudit étage d'émission (5) et compatible avec ledit protocole de communication.

7. Dispositif selon la revendication 6, **caractérisé en ce qu'**en présence d'un point d'accès (2-n) comprenant un étage d'émission (5) comportant un module optoélectronique d'émission (7) propre à convertir en signal lumineux un signal numérique issu d'un premier signal et un premier module de conditionnement (8) intercalé entre ladite interface d'entrée/sortie (4) et ledit module optoélectronique d'émission (7) et propre à mettre en forme ledit premier signal pour qu'il soit compatible avec un niveau de tension admissible par ledit module optoélectronique d'émission (7), et un étage de réception (6) comportant un module optoélectronique de réception (10) propre à convertir un signal lumineux reçu en un signal numérique représentatif d'un second signal et un second module de conditionnement (11) intercalé entre ladite interface d'entrée/sortie (4) et ledit module optoélectronique de réception (10) et propre à mettre en forme ledit signal numérique fourni par ledit module optoélectronique de réception (10) pour que ledit second signal résultant soit interprétable sur ledit bus de communication (3), il est propre à agir sur lesdits premier (8) et second (11) modules de conditionnement pour les activer/désactiver.

8. Dispositif selon la revendication 7, **caractérisé en ce qu'**une première somme dudit premier décalage temporel et d'un premier temps de propagation dudit premier signal dans ledit premier module de conditionnement (8) additionnée à une seconde somme dudit second décalage temporel et d'un second temps de propagation dudit signal numérique représentatif d'un second signal dans ledit second module de conditionnement (11) est inférieure à une demi-période dudit protocole de communication.

9. Dispositif selon l'une des revendications 7 ou 8, **caractérisé en ce qu'**il comprend un premier détecteur de signal (16) agencé pour détecter chaque premier signal fourni par ladite interface d'entrée/sortie (4), et un second détecteur de signal (17) agencé pour détecter chaque signal fourni par ledit second module de conditionnement (11).

10. Dispositif selon la revendication 3 ou 9, **caractérisé en ce que** lesdits premier (13, 16) et second (14, 17) détecteurs de signal comprennent chacun un multivibrateur monostable.

11. Dispositif selon l'une des revendications 6 à 10, **caractérisé en ce qu'**il comprend au moins un premier comparateur (18) introduisant ledit premier décalage temporel, et au moins un second comparateur (19) introduisant ledit second décalage temporel.

12. Dispositif selon l'une des revendications 7 et 8, **caractérisé en ce qu'**il comprend un contrôleur (20) agencé pour détecter chaque premier signal et chaque second signal, et pour activer/désactiver lesdits étage d'émission (5) et étage de réception (6).

13. Dispositif selon la revendication 12, **caractérisé en ce que** ledit contrôleur (20) est agencé pour activer/désactiver lesdits premier module de conditionnement (8) et second module de conditionnement (11).

14. Dispositif selon la revendication 12 ou 13 prise en combinaison avec l'une des revendications 6 à 8, **caractérisé en ce que** ledit contrôleur (15, 20) est agencé pour introduire lesdits premier et second décalages temporels.

15. Point d'accès (2-n) comprenant une interface d'entrée/sortie (4) propre à être connectée à un bus de communication (3) utilisant un protocole de communication, un étage d'émission (5) propre à convertir un premier signal issu de ladite interface d'entrée/sortie (4) en un signal lumineux émis, et un étage de réception (6) propre à convertir un signal lumineux reçu en un second signal communiqué à ladite interface d'entrée/sortie (4), **caractérisé en ce qu'**il comprend en outre un dispositif de contrôle (1) selon l'une des revendications précédentes.

16. Point d'accès selon la revendication 15, **caractérisé en ce qu'**il est propre à faire partie d'un réseau optique non filaire de type Light Fidelity.

## Patentansprüche

1. Steuervorrichtung (1) für einen Zugangspunkt (2-n), der eine Eingangs-/Ausgangsschnittstelle (4), die mit einem Kommunikationsbus (3) verbunden ist, der ein Kommunikationsprotokoll verwendet, eine Sendestufe (5), die dazu geeignet ist, ein erstes Signal, das von der Eingangs-/Ausgangsschnittstelle (4) stammt, in ein gesendetes Lichtsignal umzuwandeln, und eine Empfangsstufe (6) umfasst, die dazu geeignet ist, ein empfangenes Lichtsignal in ein zweites Signal umzuwandeln, das an die Eingangs-/Ausgangsschnittstelle (4) übermittelt wird,
**dadurch gekennzeichnet, dass** sie so eingerichtet ist, dass sie entweder die Empfangsstufe (6) deaktiviert, wenn die Eingangs-/Ausgangsschnittstelle (4) ein erstes Signal von dem Kommunikationsbus (3) empfängt, und die Empfangsstufe (6) aktiviert, wenn die Eingangs-/Ausgangsschnittstelle (4) kein erstes Signal mehr von dem Kommunikationsbus (3) empfängt, oder dass sie die Sendestufe (5) deaktiviert, wenn die Empfangsstufe (6) ein Lichtsignal empfängt, und die Sendestufe (5) aktiviert, wenn die Empfangsstufe (6) kein Lichtsignal mehr empfängt.

2. Vorrichtung nach Anspruch 1, **dadurch gekennzeichnet, dass** sie bei Vorhandensein eines Zugangspunkts (2-n), der eine Sendestufe (5) mit einem optoelektronischen Sendemodul (7), das dazu geeignet ist, ein von einem ersten Signal stammendes digitales Signal in ein Lichtsignal umzuwandeln, und eine Empfangsstufe (6) mit einem optoelektronischen Empfangsmodul (10) umfasst, das dazu geeignet ist, ein empfangene Lichtsignal in ein digitales Signal umzuwandeln, das ein zweites Signal repräsentiert, so angeordnet ist, dass sie entweder das optoelektronischen Empfangsmodul (10) deaktiviert, wenn die Eingangs-/Ausgangsschnittstelle (4) ein erstes Signal von dem Kommunikationsbus (3) empfängt, und das optoelektronische Empfangsmodul (10) aktiviert, wenn die Eingangs-/Ausgangsschnittstelle (4) kein erstes Signal mehr von dem Kommunikationsbus (3) empfängt, oder das optoelektronische Sendemoduls (7) deaktiviert, wenn die Empfangsstufe (6) ein Lichtsignal empfängt, und das optoelektronische Sendemoduls (7) aktiviert, wenn die Empfangsstufe (6) kein Lichtsignal mehr empfängt.

3. Vorrichtung nach Anspruch 2, **dadurch gekennzeichnet, dass** sie bei Vorhandensein eines Zugangspunkts (2-n), der eine Sendestufe (5) mit einem ersten Aufbereitungsmodul (8), das zwischen der Eingangs-/Ausgangsschnittstelle (4) und dem optoelektronischen Sendemodul (7) geschaltet und dazu geeignet ist, das erste Signal so zu formen, dass es mit einem vom optoelektronischen Sendemodul (7) zulässigen Spannungspegel kompatibel ist, und eine Empfangsstufe (6) mit einem zweiten Aufbereitungsmodul (11) umfasst, das zwischen das optoelektronische Empfangsmodul (10) und die Eingangs-/Ausgangsschnittstelle (4) geschaltet und dazu geeignet ist, das von dem optoelektronischen Empfangsmodul (10) bereitgestellte digitale Signal so zu formen, dass das resultierende zweite Signal auf dem Kommunikationsbus (3) interpretierbar ist, einen ersten Signaldetektor (13), der so angeordnet ist, dass er jedes erste Signal in dem ersten Aufbereitungsmodul (8) detektiert und das optoelektronische Empfangsmodul (10) aktiviert/deaktiviert, und einen zweiten Signaldetektor (14) umfasst, der so angeordnet ist, dass er jedes vom optoelektronischen Empfangsmodul (10) bereitgestellte digitale Signal in dem zweiten Aufbereitungsmodul (11) detektiert und das optoelektronische Sendemodul (7) aktiviert/deaktiviert.

4. Vorrichtung nach Anspruch 2, **dadurch gekennzeichnet, dass** sie eine Steuerung (15) umfasst, die so angeordnet ist, dass sie jedes erste Signal und jedes digitale Signal detektiert und die Sendestufe (5) und die Empfangsstufe (6) aktiviert/deaktiviert.

5. Vorrichtung nach der Kombination der Ansprüche 2 und 4, **dadurch gekennzeichnet, dass** die Steuerung (15) so angeordnet ist, dass sie das optoelektronische Sendemodul (7) und das optoelektronische Empfangsmodul (10) aktiviert/deaktiviert.

6. Vorrichtung nach Anspruch 1, **dadurch gekennzeichnet, dass** sie so angeordnet ist, dass sie in die Sendestufe (5) einen ersten Zeitversatz jedes ersten Signals einführt, der größer oder gleich einer ersten Zeitdauer ist, die für die Deaktivierung der Empfangsstufe (6) erforderlich und mit dem Kommunikationsprotokoll kompatibel ist, und in die Empfangsstufe (6) einen zweiten Zeitversatz jedes zweiten Signals einführt, bevor es die Eingangs-/Ausgangsschnittstelle (4) erreicht, wobei der zweite Zeitversatz größer als eine zweite Zeitdauer ist, die für die Deaktivierung der Sendestufe (5) erforderlich und mit dem Kommunikationsprotokoll kompatibel ist.

7. Vorrichtung nach Anspruch 6, **dadurch gekennzeichnet, dass** sie bei Vorhandensein eines Zugangspunkts (2-n), der eine Sendestufe (5) mit einem optoelektronischen Sendemodul (7), das dazu geeignet ist, ein von einem ersten Signal stammendes digitales Signal in ein Lichtsignal umzuwandeln, und einem ersten Aufbereitungsmodul (8), das zwischen der Eingangs-/Ausgangsschnittstelle (4) und dem optoelektronischen Sendemodul (7) geschaltet und dazu geeignet ist, das erste Signal so zu formen, dass es mit einem für das optoelektronische Sendemodul (7) zulässigen Spannungspegel kompatibel ist, und eine Empfangsstufe (6) mit einem optoelektronischen Empfangsmodul (10), das dazu geeignet ist, ein empfangenes Lichtsignal in ein digitales Signal umzuwandeln, das ein zweites Signal repräsentiert, und einem zweiten Aufbereitungsmodul (11) umfasst, das zwischen der Eingangs-/Ausgangsschnittstelle (4) und dem optoelektronischen Empfangsmodul (10) geschaltet und dazu geeignet ist, das von dem optoelektronischen Empfangsmodul (10) bereitgestellte digitale Signal so zu formen, dass das resultierende zweite Signal auf dem Kommunikationsbus (3) interpretierbar ist, dazu geeignet ist, auf das erste (8) und das zweite (11) Aufbereitungsmodul einzuwirken, um sie zu aktivieren/deaktivieren.

8. Vorrichtung nach Anspruch 7, **dadurch gekennzeichnet, dass** eine erste Summe der ersten Zeitversatzes und einer ersten Ausbreitungszeit des ersten Signals in dem ersten Aufbereitungsmodul (8) addiert zu einer zweiten Summe des zweiten Zeitversatzes und einer zweiten Ausbreitungszeit des digitalen Signals, das ein zweites Signal in dem zweiten Aufbereitungsmodul (11) repräsentiert, kleiner als eine halbe Periode des Kommunikationsprotokolls ist.

9. Vorrichtung nach einem der Ansprüche 7 oder 8, **dadurch gekennzeichnet, dass** sie einen ersten Signaldetektor (16) umfasst, der so angeordnet ist, dass er jedes von der Eingangs-/Ausgangsschnittstelle (4) bereitgestellte erste Signal detektiert, und einen zweiten Signaldetektor (17), der so angeordnet ist, dass er jedes von dem zweiten Aufbereitungsmodul (11) bereitgestellte Signal detektiert.

10. Vorrichtung nach Anspruch 3 oder 9, **dadurch gekennzeichnet, dass** die ersten (13, 16) und die zweiten (14, 17) Signaldetektoren jeweils einen monostabilen Multivibrator umfassen.

11. Vorrichtung nach einem der Ansprüche 6 bis 10, **dadurch gekennzeichnet, dass** sie mindestens einen ersten Komparator (18) umfasst, der den ersten Zeitversatz einführt, und mindestens einen zweiten Komparator (19) umfasst, der den zweiten Zeitversatz einführt.

12. Vorrichtung nach einem der Ansprüche 7 und 8, **dadurch gekennzeichnet, dass** sie eine Steuerung (20) umfasst, die so angeordnet ist, dass sie jedes erste Signal und jedes zweite Signal detektiert und die Sendestufe (5) und die Empfangsstufe (6) aktiviert/deaktiviert.

13. Vorrichtung nach Anspruch 12, **dadurch gekennzeichnet, dass** die Steuerung (20) so angeordnet ist, dass sie das erste Aufbereitungsmodul (8) und das zweite Aufbereitungsmodul (11) aktiviert/deaktiviert.

14. Vorrichtung nach Anspruch 12 oder 13 in Kombination mit einem der Ansprüche 6 bis 8, **dadurch gekennzeichnet, dass** die Steuerung (15, 20) so angeordnet ist, dass sie die ersten und zweiten Zeitversätze einführt.

15. Zugangspunkt (2-n), der eine Eingangs-/Ausgangsschnittstelle (4), die dazu geeignet ist, mit einem Kommunikationsbus (3) verbunden zu werden, der ein Kommunikationsprotokoll verwendet, eine Sendestufe (5), die dazu geeignet ist, ein erstes Signal, das von der Eingangs-/Ausgangsschnittstelle (4) stammt, in ein gesendetes Lichtsignal umzuwandeln, und eine Empfangsstufe (6) umfasst, die dazu geeignet ist, ein empfangenes Lichtsignal in ein zweites Signal umzuwandeln, das an die Eingangs-/Ausgangsschnittstelle (4) übermittelt wird, **dadurch gekennzeichnet, dass** er ferner eine Steuervorrichtung (1) nach einem der vorhergehenden Ansprüche umfasst.

16. Zugangspunkt nach Anspruch 15, **dadurch gekennzeichnet, dass** er dazu geeignet ist, Teil eines drahtlosen optischen Netzwerks vom Typ Light Fidelity zu sein.

## Claims

1. A control device (1) for an access point (2-n) comprising an input/output interface (4) connected to a communication bus (3) using a communication protocol, a transmitting stage (5) suitable for converting a first signal from said input/output interface (4) into a transmitted light signal, and a receiving stage (6) suitable for converting a received light signal into a second signal passed on to said input/output interface (4),
**characterized in that** it is arranged either to disable said receiving stage (6) when said input/output interface (4) receives a first signal from said communication bus (3), and to enable said receiving stage (6) when said input/output interface (4) no longer receives a first signal from said communication bus (3), or to disable said transmitting stage (5) when said receiving stage (6) receives a light signal, and to enable said transmitting stage (5) when said receiving stage (6) no longer receives a light signal.

2. The device according to claim 1, **characterized in that** in the presence of an access point (2-n) comprising a transmitting stage (5) including a transmitting optoelectronic module (7) suitable for converting a digital signal derived from a first signal into a light signal, and a receiving stage (6) including a receiving optoelectronic module (10) suitable for converting a received light signal into a digital signal representative of a second signal, it is arranged either to disable said receiving optoelectronic module (10) when said input/output interface (4) receives a first signal from said communication bus (3), and to enable said receiving optoelectronic module (10) when said input/output interface (4) no longer receives a first signal from said communication bus (3), or to disable said transmitting optoelectronic module (7) when said receiving stage (6) receives a light signal, and to enable said transmitting optoelectronic module (7) when said receiving stage (6) no longer receives a light signal.

3. The device according to claim 2, **characterized in that** in the presence of an access point (2-n) comprising a transmitting stage (5) including a first conditioning module (8) interposed between said input/output interface (4) and said transmitting optoelectronic module (7) and suitable for shaping said first signal so that it is compatible with a voltage level admissible by said transmitting optoelectronic module (7), and a receiving stage (6) including a second conditioning module (11) interposed between said receiving optoelectronic module (10) and said input/output interface (4) and suitable for shaping said digital signal supplied by said receiving optoelectronic module (10) so that said resulting second signal can be interpreted on said communication bus (3), it comprises a first signal detector (13) arranged to detect each first signal in said first conditioning module (8) and to enable/disable said receiving optoelectronic module (10), and a second signal detector (14) arranged to detect each digital signal supplied by said receiving optoelectronic module (10) in said second conditioning module (11) and to enable/disable said transmitting optoelectronic module (7).

4. The device according to claim 2, **characterized in that** it comprises a controller (15) arranged to detect each first signal and each digital signal, and to enable/disable said transmitting stage (5) and receiving stage (6).

5. The device according to the combination of claims 2 and 4, **characterized in that** said controller (15) is arranged to enable/disable said transmitting optoelectronic module (7) and receiving optoelectronic module (10).

6. The device according to claim 1, **characterized in that** it is arranged to introduce into said transmitting stage (5) a first time offset of each first signal greater than or equal to a first duration required for disabling said receiving stage (6) and compatible with said communication protocol, and to introduce into said receiving stage (6) a second time offset of each second signal before it reaches said input/output interface (4), this second time offset being greater than a second duration required for disabling said transmitting stage (5) and compatible with said communication protocol.

7. The device according to claim 6, **characterized in that** in the presence of an access point (2-n) comprising a transmitting stage (5) including a transmitting optoelectronic module (7) suitable for converting a digital signal derived from a first signal into a light signal, and a first conditioning module (8) interposed between said input/output interface (4) and said transmitting optoelectronic module (7) and suitable for shaping said first signal so that it is compatible with a voltage level admissible by said transmitting optoelectronic module (7), and a receiving stage (6) comprising a receiving optoelectronic module (10) suitable to convert a received light signal into a digital signal representative of a second signal, and a second conditioning module (11) interposed between said input/output interface (4) and said receiving optoelectronic module (10) and suitable for shaping said digital signal supplied by said receiving optoelectronic module (10) so that said resulting second signal can be interpreted on said communication bus (3), it is able to act on said first (8) and second (11) conditioning modules to enable/disable them.

8. The device according to claim 7, **characterized in that** a first sum of said first time offset and a first propagation time of said first signal in said first conditioning module (8) added to a second sum of said second time offset and a second propagation time of said digital signal representative of a second signal in said second conditioning module (11) is less than half a period of said communication protocol.

9. The device according to one of claims 7 or 8, **characterized in that** it comprises a first signal detector (16) arranged for detecting each first signal supplied by said input/output interface (4), and a second signal detector (17) arranged for detecting each signal supplied by said second conditioning module (11).

10. The device according to claim 3 or 9, **characterized in that** said first (13, 16) and second (14, 17) signal detectors each comprise a monostable multivibrator.

11. The device according to one of claims 6 to 10, **characterized in that** it comprises at least one first comparator (18) introducing said first time offset, and at least one second comparator (19) introducing said second time offset.

12. The device according to one of claims 7 and 8, **characterized in that** it comprises a controller (20) arranged to detect each first signal and each second signal, and to enable/disable said transmitting stage (5) and receiving stage (6).

13. The device according to claim 12, **characterized in that** said controller (20) is arranged to enable/disable said first conditioning module (8) and second conditioning module (11).

14. The device according to claim 12 or 13 in combination with one of claims 6 to 8, **characterized in that** said controller (15, 20) is arranged to introduce said first and second time offsets.

15. An access point (2-n) comprising an input/output interface (4) suitable for connection to a communication bus (3) using a communication protocol, a transmitting stage (5) suitable for converting a first signal from said input/output interface (4) into a transmitted light signal, and a receiving stage (6) suitable for converting a received light signal into a second signal passed on to said input/output interface (4), **characterized in that** it further comprises a control device (1) according to one of the preceding claims.

16. The access point according to claim 15, **characterized in that** it is suitable for forming part of a Light Fidelity optical wireless network.
